# EUROPEAN PATENT APPLICATION

(11) **EP 4 739 001 A2**
(43) Date of publication of application: **06.05.2026**
(21) Application number: 25208953.7
(22) Date of filing: 15.10.2025
(51) Int. Cl.: H05B 45/50, H05B 45/58, H05B 47/29, B60Q 11/00

(54) **VEHICLE SYSTEM REDUNDANCY**

(30) Priority: 31.10.2024 SE 2451073
(71) Applicant: Volvo Truck Corporation, 405 08 Göteborg (SE)
(72) Inventor: Ni, Lei, 417 67 Göteborg (SE); Ediz, Said, 421 33 Västra Frölunda (SE); Wölfinger, Alexander, 442 65 Marstrand (SE); Hansson, Johan, 436 38 Askim (SE)
(74) Representative: Valea AB

(57) **Abstract**

A computer system (700) comprising processing circuitry (702) configured to handle a lighting system (1) of a vehicle (2) is provided. The lighting system comprises at least two redundant component groups (4) each comprising a respective plurality of light sources (5) and each being powered by a respective separate power source (6). The processing circuitry is further configured to: obtain diagnosis data of the lighting system, which diagnosis data is indicative of a status of the at least two redundant component groups in comparison with a predeterminable safety model; and in response to the diagnosis data indicating a fault or risk of fault associated with at least a first (41) of the at least two redundant component groups, reconfigure the lighting system to utilize at least a first (42, 43) of the at least two redundant component groups not associated with said fault or risk of fault.

## Description

### TECHNICAL FIELD

The disclosure relates generally to vehicle system redundancy. In particular aspects, the disclosure relates to handling of a lighting system of a vehicle. The disclosure can be applied to heavy-duty vehicles, trucks, buses, and construction equipment, among other vehicle types. Although the disclosure may be described with respect to a particular vehicle, the disclosure is not restricted to any particular vehicle.

### BACKGROUND

Vehicles, such as heavy-duty vehicles e.g. trucks, commonly comprise numerous E/E subsystems - i.e. electrical/electronic subsystems - regulating different operations inside the vehicle. This may especially be true for autonomous vehicles, which further may need to be fail-operational and/or adhere to strict safety regulations such as for instance commonly known Safety Integrity Level D (ASIL-D) requirements, that may require a vehicle to remain fail-operational - for instance ASIL-D fail-operational - even if a limited number of failures are present in the vehicle's E/E subsystem(s). There is a strive for increasing the time a vehicle may remain fail-operational and/or in a fail-operational state and there is room for improvement, for instance when it comes to vehicle lighting systems such as exterior vehicle lighting systems e.g. brake light systems.

### SUMMARY

According to a first aspect of the disclosure, there is provided a computer system comprising processing circuitry configured to handle a lighting system of a vehicle, which lighting system comprises at least two redundant component groups each comprising a respective plurality of light sources and each being powered by a respective separate power source.

The processing circuitry is further configured to obtain diagnosis data of the lighting system, which diagnosis data is indicative of a status of the at least two redundant component groups in comparison with a predeterminable safety model.

Moreover, the processing circuitry is further configured to, in response to the diagnosis data indicating a fault or risk of fault associated with at least a first of the at least two redundant component groups, reconfigure the lighting system to utilize at least a first of the at least two redundant component groups not associated with said fault or risk of fault.

The first aspect of the disclosure may seek to provide redundancy in a lighting system - e.g. an exterior lighting system - of a vehicle - e.g. a heavy-duty vehicle - such that robustness may be increased. Thereby, the vehicle - e.g. an autonomous or at least partly autonomous vehicle - may remain fail-operational and/or in a fail-operational state to greater extent - for instance adhering to safety requirements e.g. imposed by the ASIL-D standard - which may translate into an increased availability of the vehicle.

Since the processing circuitry is configured to handle a lighting system of a vehicle, which lighting system comprises at least two - for instance three - redundant component groups each comprising a respective plurality of light sources and each being powered by a respective separate power source, there is provided a lighting system supporting redundancy in that respective component group - which each may comprise for instance a plurality of light emitting diodes (LEDs) and further for instance be arranged in a common or respective array and/or matrix - may function irrespective of one another.

Furthermore, since the processing circuitry is further configured to obtain diagnosis data of the lighting system, which diagnosis data is indicative of a status of the at least two redundant component groups in comparison with a predeterminable safety model, there is obtained, derived and/or received status information with respect to each component group - for instance comprising information relating to respective group's plurality of light sources and/or power source - in view of adherence to set safety requirements - for instance relating to compliance with for instance a minimum light intensity and/or a minimum light activation response time etc. - such as for instance imposed by the ASIL-D standard.

Moreover, since the processing circuitry is further configured to, in response to the diagnosis data indicating a fault or risk of fault associated with at least a first of the at least two redundant component groups, reconfigure the lighting system to utilize at least a first of the at least two redundant component groups not associated with said fault or risk of fault, the lighting system may - from confronting the status information i.e. diagnosis data of respective component group in view of the safety model - rely on - for instance activate - one or more component groups having a status not being indicated as faulty or in risk of being faulty, whereas the one or more component groups having a faulty and/or risk of faulty status may be ignored and/or inactivated. Thereby, a robust lighting system of a vehicle is provided, enabling the vehicle to remain fail-operational and/or in a fail-operational state to a greater extent as compared to known vehicle lighting systems, and which further may enable an increased availability of the vehicle.

Optionally in some examples, including in at least one preferred example, the lighting system comprises a brake light system. A technical benefit may include that a solution for redundant vehicle brake lights is provided, thus enabling for a vehicle such as a heavy-duty vehicle - for instance autonomous or at least partly autonomous - to remain fail-operational and/or in a fail-operational state to a greater extent as compared to known vehicle brake light systems, which may translate into an increased availability of the vehicle.

Optionally in some examples, including in at least one preferred example, each of the at least two redundant component groups controls alternating LEDs along rows and/or columns of a LED array and/or matrix. A technical benefit may include that numerous light sources comprising and/or represented by LEDs may be arranged in an efficient and/or feasible manner in a - e.g. combined - array and/or matrix - e.g. a dot array and/or matrix - with LEDs controlled by and/or comprised in respective component group arranged e.g. in a manner desired and/or restricted by the situation and/or implementation at hand, for instance in repetitive patterns and/or evenly distributed.

Optionally in some examples, including in at least one preferred example, obtaining diagnosis data comprises generating control signals to the lighting system, measuring a response and/or reaction from the lighting system and comparing the response and/or reaction based on the predeterminable safety model to establish the diagnosis data. A technical benefit may include that the diagnosis data may be obtained, derived and/or deduced in a feasible manner, including assessment of whether response(s) and/or reactions from the lighting system - such as from respective component group - comply with and/or adhere to the safety model e.g. ASIL-D requirements.

Optionally in some examples, including in at least one preferred example, reconfiguring the lighting system comprises reconfiguring the output of the plurality of light sources of at least a first of the at least two redundant component groups not associated with the fault or risk of fault. A technical benefit may include that light sources - e.g. LEDs - of component groups which in the diagnosis data not were associated with a fault or risk of fault - herein throughout referred to as non-faulty - may be utilized to potentially compensate for component group(s) associated with a fault or risk of fault - herein throughout referred to as faulty - for instance in such a case the faulty component group(s) were intended to be concurrently utilized along with other component group(s). The output of one or more of the non-faulty component group(s) may accordingly be for instance reconfigured in terms of light intensity, brightness, power etc, thus potentially in some sense compensating for faulty component group(s) which - following being identified as faulty - for instance may be ignored and/or inactivated.

According to a second aspect of the disclosure, there is provided a vehicle - for instance a heavy-duty vehicle and/or an at least partly autonomous vehicle - comprising and/or being controlled by the computer system according to the first aspect.

According to a third aspect of the disclosure, there is provided a computer-implemented method for handling a lighting system of a vehicle, the lighting system comprising at least two redundant component groups each comprising a respective plurality of light sources and each being powered by a respective separate power source.

The method comprises, by processing circuitry of a computer system, obtaining diagnosis data of the lighting system, which diagnosis data is indicative of a status of the at least two redundant component groups in comparison with a predeterminable safety model.

The method further comprises, by the processing circuitry, in response to the diagnosis data indicating a fault or risk of fault associated with at least a first of the at least two redundant component groups, reconfiguring the lighting system to utilize at least a first of the at least two redundant component groups not associated with said fault or risk of fault.

Optionally in some examples, including in at least one preferred example, the lighting system comprises a brake light system.

Optionally in some examples, including in at least one preferred example, each of the at least two redundant component groups controls alternating LEDs along rows and/or columns of a LED array and/or matrix.

Optionally in some examples, including in at least one preferred example, the obtaining of diagnosis data comprises generating control signals to the lighting system, measuring a response and/or reaction from the lighting system and comparing the response and/or reaction based on the predeterminable safety model to establish the diagnosis data.

Optionally in some examples, including in at least one preferred example, the reconfiguring of the lighting system comprises reconfiguring the output of the plurality of light sources of at least a first of the at least two redundant component groups not associated with the fault or risk of fault.

According to a fourth aspect of the disclosure, there is provided a lighting system of a vehicle, the lighting system comprising at least two redundant component groups each comprising a respective plurality of light sources and each being powered by a respective separate power source, wherein the at least two redundant component groups respectively comprises alternating LEDs along rows and/or columns of a LED array and/or matrix.

Since the lighting system comprises the at least two redundant component groups each powered by a respective separate power source, a robust lighting system is provided which may enable a vehicle using the lighting system to remain fail-operational and/or in a fail-operational state to a greater extent as compared to using known vehicle lighting systems. This is due to if one of the component groups fails or their respective separate power source fails, the lighting system can still provide sufficient lighting by using the remaining non-faulty component groups.

Optionally in some examples, including in at least one preferred example, said lighting system comprises a brake light system.

The second, third and fourth aspects may correspond to any of the features, examples, and/or benefits of the first aspect and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle comprising a lighting system according to an example.
**FIG. 2** depicts an exemplary lighting system according to an example.
**FIG. 3** illustrates exemplary respective plurality of light sources according to an example.
**FIG. 4** is an exemplary flow chart of a computer-implemented method for handling a lighting system of a vehicle according to an example.
**FIG. 5** depicts an exemplary lighting system according to an example.
**FIG. 6** illustrates exemplary respective plurality of light sources according to an example.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Examples herein may relate to increasing the time a vehicle may remain fail-operational and/or in a fail-operational state in view of vehicle lighting systems such as exterior vehicle lighting systems e.g. brake light systems. With the introduced concept, there is provided redundancy in a lighting system - e.g. an exterior lighting system - of a vehicle - e.g. a heavy-duty vehicle - such that robustness may be increased. Thereby, the vehicle - e.g. an autonomous or at least partly autonomous vehicle - may remain fail-operational and/or in a fail-operational state to greater extent - for instance adhering to safety requirements e.g. imposed by the ASIL-D standard - which may translate into an increased availability of the vehicle.

Autonomous as used herein may mean that a vehicle is at least partly controlled without explicit control by a user, such that the vehicle itself may control steering and/or vehicle motion of the vehicle e.g., without a driver providing force to pedals or steering wheels of the vehicle.

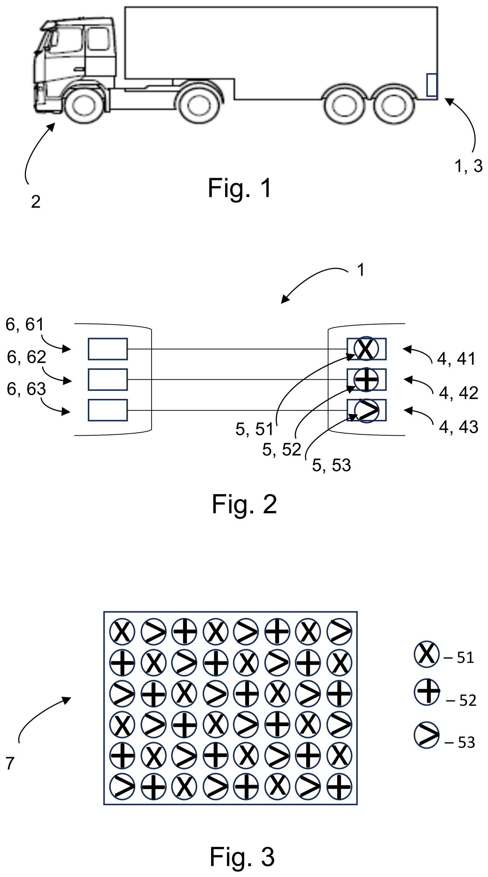

**FIG. 1** illustrates an exemplary **vehicle 2** comprising a **lighting system 1** according to an example. The vehicle 2 may be any suitable - for instance at least partly autonomous - vehicle, such as for instance a heavy-duty vehicle. The lighting system 1, on the other hand, may refer to any lighting system of a vehicle bound to comply with safety requirements, such as for instance an external lighting system of the vehicle 2. Here, the lighting system 1 is exemplified as a **brake light system 3** - according to other examples the lighting system 1 may for instance relate to taillights, reversing lights, marker lights, head lights, front lights, etc.

As illustrated in **FIG. 2** - which depicts an exemplary lighting system 1 according to an example - the lighting system 1 comprises at least two **redundant component groups 4** - here a **first 41, second 42** and **third 43** redundant component group - each comprising a respective plurality of **light sources 5** - here a **first 51, second 52** and **third 53** plurality of light sources - and each being powered by a respective **separate power source 6** - here a **first 61, second 62** and **third 63** power source. The number of redundant component groups 4 may vary from two up to three or even more, for instance depending on strictness of safety requirements to comply with. For instance, adhering to ASIL-D may require three - or more - redundant component groups 4. Furthermore, the redundant component groups 4 may respectively comprise any further additional e.g. sensors, actuators etc. needed. The respective plurality of light sources 5, on the other hand - which may refer to any plural light sources suited for automotive implementations - may range from merely a few up to numerous light sources for each respective plurality of light sources 51, 52, 53. Here, the respective plurality of light sources 5 are exemplified by LEDs - according to other examples respective plurality of light sources 5 may for instance relate to bulbs such as incandescent and/or halogen bulbs. The number of light sources in respective plurality of light sources 51, 52, 53 may vary from one redundant component group 41 to another 42, 43.

Respective plurality of light sources 51, 52, 53 may be arranged, disposed and/or situated in relation to one another in any feasible manner e.g. suitable and/or restricted by the implementation and/or situation at hand, for instance arranged in a common or respective array and/or matrix. As depicted in **FIG. 3**, which illustrates exemplary respective plurality of light sources 51, 52, 53 according to an example, each of the at least two redundant component groups 4 - here a first 41, second 42 and third 43 redundant component group - may optionally control - and/or respectively comprise - alternating LEDs 51, 52, 53 along rows and/or columns of a - for instance combined and/or shared - **LED array and/or matrix 7** such as a LED dot array and/or matrix. The number of LEDs as well as rows and/or columns may vary, along with patterns of how the differing plurality of light sources 51, 52, 53 - here LEDs - are distributed. In the shown example, the three differing plurality of light sources 51, 52, 53 are evenly distributed in an exemplifying manner.

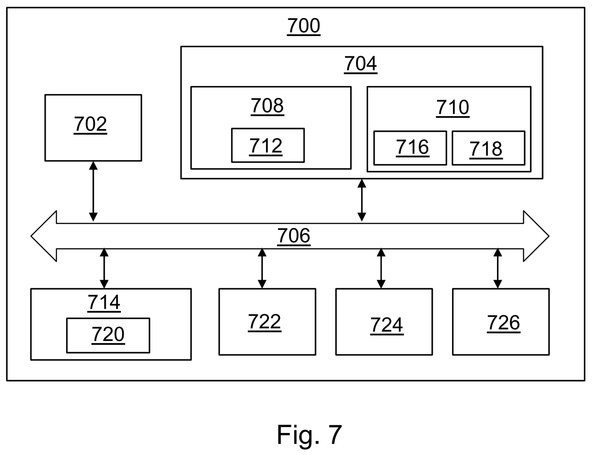

Examples herein may be performed by a **computer system 700** and/or a **processing circuitry 702** therein, illustrated in **Fig. 7** further on. The computer system 700 and/or the processing circuitry 702 therein may be comprised in the vehicle 2 and/or at least partly remote from said vehicle 2 such as part of a server or cloud service. In some examples, the computer system 700 and/or the processing circuitry 702 may be or may comprise an Electronic Control Unit (ECU).

In some examples, the computer system 700 and/or the processing circuitry 702 therein may be communicatively coupled with, and/or capable of controlling any suitable entity of the vehicle 2. For example, the computer system 700 and/or the processing circuitry 702 may be able to handle the lighting system 1, for instance activate/inactivate the lighting system 1, such as in response to e.g. braking being activated/inactivated in the vehicle 2.

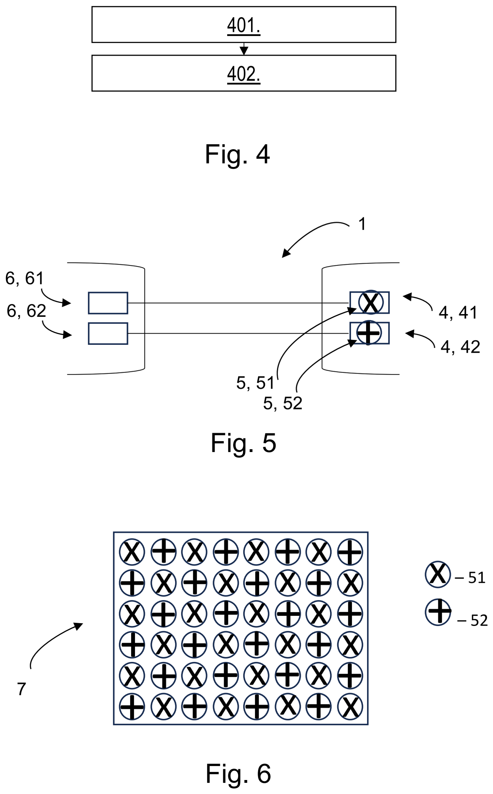

**FIG. 4** is an exemplary flow chart of a computer-implemented method for handling the lighting system 1 of the vehicle 2 according to an example. As previously discussed, the lighting system 1 comprises at least two redundant component groups 4 each comprising a respective plurality of light sources 5 and each being powered by a respective separate power source 6. As further previously discussed, the lighting system 1 may, according to an example, comprise a brake light system 3. Furthermore, according to an example, each of the at least two redundant component groups 41, 42, 43 may control alternating LEDs along rows and/or columns of a LED array and/or matrix 7. The actions described below may be performed by the computer system 700 and/or the processing circuitry 702 therein.

### Action 401

The method comprises obtaining diagnosis data - such as diagnostic information and/or status data - of the lighting system 1, which diagnosis data is indicative of a status of the at least two redundant component groups 4 in comparison with a predeterminable safety model. The - e.g. predefined - safety model may be defined by, derived from and/or based on any restrictions and/requirements in terms of safety for the vehicle 2, for instance as imposed by the ASIL-D standard, for adherence therewith. Additionally or alternatively, the safety model may be defined by, derived from and/or based on for instance minimum light intensity, activation response time, etc., to seek compliance therewith.

Furthermore, the diagnosis data may be obtained and/or determination thereof be carried out in any feasible manner with considerations of requirements and/or boundaries set by the safety model. According to an example, obtaining diagnosis data may comprise generating control signals to the lighting system 1, measuring a response and/or reaction from the lighting system 1 and comparing said response and/or reaction based on the predeterminable safety model to establish the diagnosis data. The diagnosis data - which may be of any feasible format and/or size - may indicate status for respective redundant component group 41, 42, 43, for instance each group's 41, 42, 43 status when it comes to respective plurality of light sources 51, 52, 53, activation/deactivation response time, output, on/off time etc. Moreover, the diagnosis data may reveal failure or risk or failure for the lighting system 1 - for instance respective redundant component group 41, 42, 43 - of meeting, complying with and/or adhering to the safety model or requirements thereof.

### Action 402

The method further comprises, in response to the diagnosis data indicating a fault or risk of fault associated with at least a first 41 of the at least two redundant component groups 4, reconfiguring the lighting system 1 to utilize - and/or rely on - at least a first 42, 43 of the at least two redundant component groups not associated with said fault or risk of fault. Such a reconfiguration may for instance relate to inactivating and/or ignoring the redundant component group(s) 41 indicated as faulty, that is as - in the diagnosis data - being associated with a fault and/or risk of fault, to rather utilize, rely on and/or activate one or more redundant component groups 42, 43 not indicated as faulty, that is as - in the diagnosis data - not being associated with a fault and/or risk of fault. A fault and/or risk of fault may for instance relate to one or more redundant component groups 4 not living up to requirements of the safety model, e.g. non-functioning and/or inadequately functioning component group e.g. in terms of light sources and/or power source, insufficient activation response time, and/or insufficient light source output, etc.

According to an example, reconfiguration the lighting system 1 may comprise reconfiguring the output of the plurality of light sources 52, 53 of at least a first 42, 43 of the at least two redundant component groups not associated with said fault or risk of fault. Such a reconfiguration of the output may for instance relate to increasing, intensifying and/or in any other feasible manner adapting and/or adjusting light and/or light characteristics such as intensity, brightness and/or power etc. of the plurality of light sources 52, 53 of one or more of the non-faulty redundant component groups 42, 43, for instance to - to some extent - compensate for the faulty redundant component group 41.

**FIG. 5** depicts an exemplary lighting system 1 according to an example. The lighting system 1 comprises at least two redundant component groups 4 - here a first 41 and a second 42 redundant component group - each comprising a respective plurality of light sources 5 - here a first 51 and a second 52 plurality of light sources - and each being powered by a respective separate power source 6 - here a first 61 and a second 62 power source. The lighting system 1, the at least two redundant component groups 4, respective plurality of light sources 5 and respective separate power source 6 of FIG. 5 may correspond to those exemplified in FIG. 2.

As depicted in **FIG. 6****,** which illustrates exemplary respective plurality of light sources 51, 52 according to an example, each of the at least two redundant component groups 4 - here a first 41 and a second 42 redundant component group - may optionally control - and/or respectively comprise - alternating LEDs 51, 52 along rows and/or columns of a - for instance combined and/or shared - LED array and/or matrix 7 such as a LED dot array and/or matrix. The at least two redundant component groups 41, 42 and their respective plurality of light sources 51, 52 of FIG. 6 may correspond to those exemplified in FIG. 3. The number of LEDs as well as rows and/or columns may vary, along with patterns of how the at least two differing plurality of light sources 51, 52 - here LEDs - are distributed. In the shown example, the two differing plurality of light sources 51, 52 are evenly distributed in an exemplifying manner.

**FIG. 7** is a schematic diagram of a computer system 700 for implementing examples disclosed herein. The computer system 700 is adapted to execute instructions from a computer-readable medium to perform these and/or any of the functions or processing described herein. The computer system 700 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 700 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 700 may comprise at least one computing device or electronic device capable of including firmware, hardware, and/or executing software instructions to implement the functionality described herein. The computer system 700 may include processing circuitry 702 (e.g., processing circuitry including one or more processor devices or control units), a memory 704, and a system bus 706. The computer system 700 may include at least one computing device having the processing circuitry 702. The system bus 706 provides an interface for system components including, but not limited to, the memory 704 and the processing circuitry 702. The processing circuitry 702 may include any number of hardware components for conducting data or signal processing or for executing computer code stored in memory 704. The processing circuitry 702 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 702 may further include computer executable code that controls operation of the programmable device.

The system bus 706 may be any of several types of bus structures that may further interconnect to a memory bus (with or without a memory controller), a peripheral bus, and/or a local bus using any of a variety of bus architectures. The memory 704 may be one or more devices for storing data and/or computer code for completing or facilitating methods described herein. The memory 704 may include database components, object code components, script components, or other types of information structure for supporting the various activities herein. Any distributed or local memory device may be utilized with the systems and methods of this description. The memory 704 may be communicably connected to the processing circuitry 702 (e.g., via a circuit or any other wired, wireless, or network connection) and may include computer code for executing one or more processes described herein. The memory 704 may include non-volatile memory 708 (e.g., read-only memory (ROM), erasable programmable read-only memory (EPROM), electrically erasable programmable read-only memory (EEPROM), etc.), and volatile memory 710 (e.g., random-access memory (RAM)), or any other medium which can be used to carry or store desired program code in the form of machine-executable instructions or data structures and which can be accessed by a computer or other machine with processing circuitry 702. A basic input/output system (BIOS) 712 may be stored in the non-volatile memory 708 and can include the basic routines that help to transfer information between elements within the computer system 700.

The computer system 700 may further include or be coupled to a non-transitory computer-readable storage medium such as the storage device 714, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 714 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 714 and/or in the volatile memory 710, which may include an operating system 716 and/or one or more program modules 718. All or a portion of the examples disclosed herein may be implemented as a computer program 720 stored on a transitory or non-transitory computer-usable or computer-readable storage medium (e.g., single medium or multiple media), such as the storage device 714, which includes complex programming instructions (e.g., complex computer-readable program code) to cause the processing circuitry 702 to carry out actions described herein. Thus, the computer-readable program code of the computer program 720 can comprise software instructions for implementing the functionality of the examples described herein when executed by the processing circuitry 702. In some examples, the storage device 714 may be a computer program product (e.g., readable storage medium) storing the computer program 720 thereon, where at least a portion of a computer program 720 may be loadable (e.g., into a processor) for implementing the functionality of the examples described herein when executed by the processing circuitry 702. The processing circuitry 702 may serve as a controller or control system for the computer system 700 that is to implement the functionality described herein.

The computer system 700 may include an input device interface 722 configured to receive input and selections to be communicated to the computer system 700 when executing instructions, such as from a keyboard, mouse, touch-sensitive surface, etc. Such input devices may be connected to the processing circuitry 702 through the input device interface
722 coupled to the system bus 706 but can be connected through other interfaces, such as a parallel port, an Institute of Electrical and Electronic Engineers (IEEE) 1394 serial port, a Universal Serial Bus (USB) port, an IR interface, and the like. The computer system 700 may include an output device interface 724 configured to forward output, such as to a display, a video display unit (e.g., a liquid crystal display (LCD) or a cathode ray tube (CRT)). The computer system 700 may include a communications interface 726 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of Examples 1-20 which may be combined with any one or more out of the above examples or actions, in any suitable manner.
**Example 1**. A computer system (700) comprising processing circuitry (702) configured to handle a lighting system (1) of a vehicle (2), the lighting system (1) comprising at least two redundant component groups (4) each comprising a respective plurality of light sources (5) and each being powered by a respective separate power source (6), wherein the processing circuitry (702) is further configured to:
   - obtain diagnosis data of the lighting system (1), said diagnosis data being indicative of a status of the at least two redundant component groups (4) in comparison with a predeterminable safety model; and
   - in response to the diagnosis data indicating a fault or risk of fault associated with at least a first (41) of the at least two redundant component groups (4), reconfigure the lighting system (1) to utilize at least a first (42, 43) of the at least two redundant component groups (4) not associated with said fault or risk of fault.
**Example 2.** The computer system (700) of Example 1, wherein said lighting system (1) comprises a brake light system (3).
**Example 3.** The computer system (700) of Example 1 or 2, wherein each of the at least two redundant component groups (4) controls alternating LEDs along rows and/or columns of a LED array and/or matrix (7).
**Example 4.** The computer system (700) of any one of Examples 1-3, wherein said obtaining diagnosis data comprises generating control signals to the lighting system (1), measuring a response and/or reaction from said lighting system (1) and comparing said response and/or reaction based on said predeterminable safety model to establish the diagnosis data.
**Example 5.** The computer system (700) of any one of Examples 1-4, wherein said reconfiguring the lighting system (1) comprises reconfiguring the output of the plurality of light sources (5) of at least a first (42, 43) of the at least two redundant component groups (4) not associated with said fault or risk of fault.
**Example 6.** A vehicle (2) comprising and/or being controlled by the computer system (700) of any of Examples 1-5.
**Example 7**. A method for handling a lighting system (1) of a vehicle (2), the lighting system (1) comprising at least two redundant component groups (4) each comprising a respective plurality of light sources (5) and each being powered by a respective separate power source (6), the method comprising:
   - by processing circuitry (702) of a computer system (700), obtaining diagnosis data of the lighting system (1), said diagnosis data being indicative of a status of the at least two redundant component groups (4) in comparison with a predeterminable safety model; and
   - by the processing circuitry (702), in response to the diagnosis data indicating a fault or risk of fault associated with at least a first (41) of the at least two redundant component groups (4), reconfiguring the lighting system (1) to utilize at least a first (42, 43) of the at least two redundant component groups (4) not associated with said fault or risk of fault.
**Example 8**. The method of Example 7, wherein said lighting system (1) comprises a brake light system (3).
**Example 9**. The method of Example 7 or 8, wherein each of the at least two redundant component groups (4) controls alternating LEDs along rows and/or columns of a LED array and/or matrix (7).
**Example 10**. The method of any one of Examples 7-9, wherein said obtaining diagnosis data comprises generating control signals to the lighting system (1), measuring a response and/or reaction from said lighting system (1) and comparing said response and/or reaction based on said predeterminable safety model to establish the diagnosis data.
**Example 11.** The method of any one of Examples 7-10, wherein said reconfiguring the lighting system (1) comprises reconfiguring the output of the plurality of light sources (5) of at least a first (42, 43) of the at least two redundant component groups (4) not associated with said fault or risk of fault.
**Example 12**. A lighting system (1) of a vehicle (2), the lighting system (1) comprising at least two redundant component groups (4) each comprising a respective plurality of light sources (5) and each being powered by a respective separate power source (6), wherein the at least two redundant component groups (4) respectively comprises alternating LEDs along rows and/or columns of a LED array and/or matrix (7).
**Example 13**. The lighting system (1) of Example 12, wherein said lighting system (1) comprises a brake light system (3).
**Example 14**. A computer program product comprising program code for performing, when executed by the processing circuitry (702), the method of any of Examples 7-11.
**Example 15.** A non-transitory computer-readable storage medium comprising instructions, which when executed by the processing circuitry (702), cause the processing circuitry (702) to perform the method of any of Examples 7-11.
**Example 16.** The computer system (700) of any of Examples 1-5, wherein said respective plurality of light sources (5) comprises LEDs.
**Example 17.** The method of any of Examples 7-11, wherein said respective plurality of light sources (5) comprises LEDs.
**Example 18.** The computer system (700) of any of Examples 1-5, 16, wherein said safety model comprises and/or is represented by the ASIL-D standard and/or ASIL-D requirements.
**Example 19.** The method of any of Examples 7-11, 17, wherein said safety model comprises and/or is represented by the ASIL-D standard and/or ASIL-D requirements.
**Example 20.** The lighting system of any of Examples 12-13, wherein said lighting system (1) comprises a brake light system (3).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (700) comprising processing circuitry (702) configured to handle a lighting system (1) of a vehicle (2), the lighting system (1) comprising at least two redundant component groups (4) each comprising a respective plurality of light sources (5) and each being powered by a respective separate power source (6), wherein the processing circuitry (702) is further configured to:
- obtain diagnosis data of the lighting system (1), said diagnosis data being indicative of a status of the at least two redundant component groups (4) in comparison with a predeterminable safety model; and
- in response to the diagnosis data indicating a fault or risk of fault associated with at least a first (41) of the at least two redundant component groups (4), reconfigure the lighting system (1) to utilize at least a first (42, 43) of the at least two redundant component groups (4) not associated with said fault or risk of fault.

2. The computer system (700) of claim 1, wherein said lighting system (1) comprises a brake light system (3).

3. The computer system (700) of claim 1 or 2, wherein each of the at least two redundant component groups (4) controls alternating LEDs along rows and/or columns of a LED array and/or matrix (7).

4. The computer system (700) of any one of claims 1-3, wherein said obtaining diagnosis data comprises generating control signals to the lighting system (1), measuring a response and/or reaction from said lighting system (1) and comparing said response and/or reaction based on said predeterminable safety model to establish the diagnosis data.

5. The computer system (700) of any one of claims 1-4, wherein said reconfiguring the lighting system (1) comprises reconfiguring the output of the plurality of light sources (5) of at least a first (42, 43) of the at least two redundant component groups (4) not associated with said fault or risk of fault.

6. A vehicle (2) comprising and/or being controlled by the computer system (700) of any of claims 1-5.

7. A method for handling a lighting system (1) of a vehicle (2), the lighting system (1) comprising at least two redundant component groups (4) each comprising a respective plurality of light sources (5) and each being powered by a respective separate power source (6), the method comprising:
- by processing circuitry (702) of a computer system (700), obtaining diagnosis data of the lighting system (1), said diagnosis data being indicative of a status of the at least two redundant component groups (4) in comparison with a predeterminable safety model; and
- by the processing circuitry (702), in response to the diagnosis data indicating a fault or risk of fault associated with at least a first (41) of the at least two redundant component groups (4), reconfiguring the lighting system (1) to utilize at least a first (42, 43) of the at least two redundant component groups (4) not associated with said fault or risk of fault.

8. The method of claim 7, wherein said lighting system (1) comprises a brake light system (3).

9. The method of claim 7 or 8, wherein each of the at least two redundant component groups (4) controls alternating LEDs along rows and/or columns of a LED array and/or matrix (7).

10. The method of any one of claims 7-9, wherein said obtaining diagnosis data comprises generating control signals to the lighting system (1), measuring a response and/or reaction from said lighting system (1) and comparing said response and/or reaction based on said predeterminable safety model to establish the diagnosis data.

11. The method of any one of claims 7-10, wherein said reconfiguring the lighting system (1) comprises reconfiguring the output of the plurality of light sources (5) of at least a first (42, 43) of the at least two redundant component groups (4) not associated with said fault or risk of fault.

12. A lighting system (1) of a vehicle (2), the lighting system (1) comprising at least two redundant component groups (4) each comprising a respective plurality of light sources (5) and each being powered by a respective separate power source (6), wherein the at least two redundant component groups (4) respectively comprises alternating LEDs along rows and/or columns of a LED array and/or matrix (7).

13. The lighting system (1) of claim 12, wherein said lighting system (1) comprises a brake light system (3).

14. A computer program product comprising program code for performing, when executed by the processing circuitry (702), the method of any of claims 7-11.

15. A non-transitory computer-readable storage medium comprising instructions, which when executed by the processing circuitry (702), cause the processing circuitry (702) to perform the method of any of claims 7-11.
